# EUROPEAN PATENT APPLICATION

(11) **EP 3 780 375 A1**
(43) Date of publication of application: **17.02.2021**
(21) Application number: 19786181.8
(22) Date of filing: 10.04.2019
(51) Int. Cl.: H02M 7/48

(54) **DIAGNOSTIC DEVICE AND DIAGNOSTIC SYSTEM**

(30) Priority: 10.04.2018 JP 2018075513
(71) Applicant: Hitachi, Ltd., Tokyo 100-8280 (JP)
(72) Inventor: OGAWA, Takashi, Tokyo 100-8280 (JP); KAGEYAMA, Hiroshi, Tokyo 100-8280 (JP); SAKURAI, Naoki, Tokyo 100-8280 (JP)
(74) Representative: MERH-IP Matias Erny Reichl Hoffmann Patentanwälte PartG mbB
(86) International application number: PCT/JP2019/015693
(87) International publication number: WO 2019/198775

(57) **Abstract**

A diagnostic device of a power conversion device, which converts AC power or DC power into AC power having a variable frequency and a variable voltage using a power semiconductor device, includes: a feature value extraction unit that extracts a temporal change value of a voltage change rate, measured at an output terminal, as a feature value; a temperature estimation unit that estimates a temperature of the power semiconductor device based on a temporal change value, which is a difference between voltage change rates of the output terminal as the feature values measured at different timings; and a temperature display unit that displays the temperature estimated by the temperature estimation unit.

## Description

### Technical Field

The present invention relates to a diagnostic device and a diagnostic system, and is particularly suitable when being applied to a diagnostic device relating to a technique for estimating the temperature of a power semiconductor device mounted on an inverter.

### Background Art

In an insulated gate bipolar transistor (IGBT) device forming an inverter of a large-capacity power conversion device, a temperature cycle due to heat generation or cooling becomes a problem in some cases. The following techniques are examples of techniques for measuring a junction temperature of an IGBT device.

As a first related art, there is a system that monitors an operating state of an IGBT device in real time, and particularly a system that determines a junction temperature of an IGBT device (see PTL 1). The first related art discloses: a differential unit configured to receive a gate-emitter voltage characteristic of the IGBT device to be measured and to differentiate the gate-emitter voltage characteristic to obtain pulses correlating with edges formed by a Miller plateau phase during a switch-off phase of the IGBT device; a timer unit configured to measure a time delay between the obtained pulses indicating the start and end of the Miller plateau phase during the switch-off phase of the IGBT device; and a junction temperature calculation unit configured to determine the junction temperature of the IGBT device based on the measured time delay. In the first related art, the operating state of the IGBT device is monitored in real time.

On the other hand, as a second related art, disclosed is a configuration in which a drive circuit of a switch element, which controls conduction or non-conduction of a semiconductor device according to a switching command for the purpose of protecting an internal temperature of the switch element from exceeding an allowable value when an inverter is operated at a low frequency, is provided with an abnormality detection means for detecting a delay period from the time when a non-conduction switching command is given to the time when the semiconductor device becomes non-conductive and outputting an abnormal signal when the delay period exceeds a predetermined period (see PTL 2). The second related art discloses a system that monitors an operating state of a bipolar device in real time using a turn-off current.

In all the patent literatures, an operating state of a device is estimated from an electrical waveform during a switch operation of the device.

### Citation List

### Patent Literature

PTL 1: JP 2013-142704 A
PTL 2: JP H7-170721 A

### Summary of Invention

### Technical Problem

In the above-described first related art, however, it is necessary to detect the Miller plateau phase of the IGBT device of each arm, and thus, it is necessary to install the differential unit and the timer unit inside the inverter near each IGBT drive circuit. On the other hand, in the above-described second related art, it is necessary to provide the abnormality detection means in each bipolar device.

In the first and second related arts, a detection means for grasping an operating state of a power semiconductor device such as the IGBT device and the bipolar device is required for each device near the device, and thus, it is difficult to retrofit the existing inverter. Moreover, in these first and second related arts, there is also the temperature dependence of various electronic components connected before a command signal is transmitted to the bipolar device, and thus, it is difficult to accurately estimate the temperature of the power semiconductor device.

The present invention has been made in consideration of the above points and aims to propose a diagnostic device and a diagnostic system that can accurately estimate the temperature of a power semiconductor device with a configuration that can be attached later.

### Solution to Problem

In order to solve such problems, the present invention includes: a feature value extraction unit that extracts a temporal change value of a voltage change rate, measured at an output terminal of a power conversion device that converts AC power or DC power into AC power having a variable frequency and a variable voltage using a power semiconductor device, as a feature value; a temperature estimation unit that estimates a temperature of the power semiconductor device based on a temporal change value, which is a difference between voltage change rates of the output terminal as the feature values measured at different timings; and a temperature display unit that displays the temperature estimated by the temperature estimation unit.

Further, the present invention includes: at least one diagnostic device that comprises: a feature value extraction unit that extracts a temporal change value of a voltage change rate, measured at an output terminal of a power conversion device that converts AC power or DC power into AC power having a variable frequency and a variable voltage using a power semiconductor device, as a feature value; and a temperature estimation unit that estimates a temperature of the power semiconductor device based on a temporal change value, which is a difference between voltage change rates of the output terminal measured at different timings; and a monitoring server that is connected to the diagnostic device via a network and monitors the power conversion device based on the temperature estimated by the temperature estimation unit.

### Advantageous Effects of Invention

According to the present invention, the temperature of the power semiconductor device can be accurately estimated by the configuration that can be attached later.

### Brief Description of Drawings

[FIG. 1] FIG. 1 is a block diagram illustrating a configuration example of an inverter diagnostic device and the like according to a first embodiment.
[FIG. 2] FIG. 2 is a block diagram illustrating a more specific configuration example of the diagnostic device in the configuration illustrated in FIG. 1.
[FIG. 3] FIG. 3 is a graph illustrating the principle of estimating the temperature of a power semiconductor device.
[FIG. 4] FIG. 4 is a flowchart illustrating an example of a procedure for estimating the temperature of the power semiconductor device.
[FIG. 5] FIG. 5 is a circuit diagram illustrating a configuration example of the power semiconductor device.
[FIG. 6] FIG. 6 is a cross-sectional view illustrating a configuration example of the power semiconductor device.
[FIG. 7] FIG. 7 is a characteristic diagram illustrating a power cycle test result of the power semiconductor device.
[FIG. 8] FIG. 8 is a block diagram illustrating a configuration example of a power conversion device 1000X including an inverter diagnostic device (hereinafter abbreviated as a "diagnostic device"), an inverter 101, and the like according to a second embodiment.
[FIG. 9] FIG. 9 is a block diagram illustrating a configuration example of an inverter diagnostic system according to a third embodiment.

### Description of Embodiments

Hereinafter, embodiments of the present invention will be described in detail with reference to the drawings.

### (1) Configuration of System According to Present Embodiment

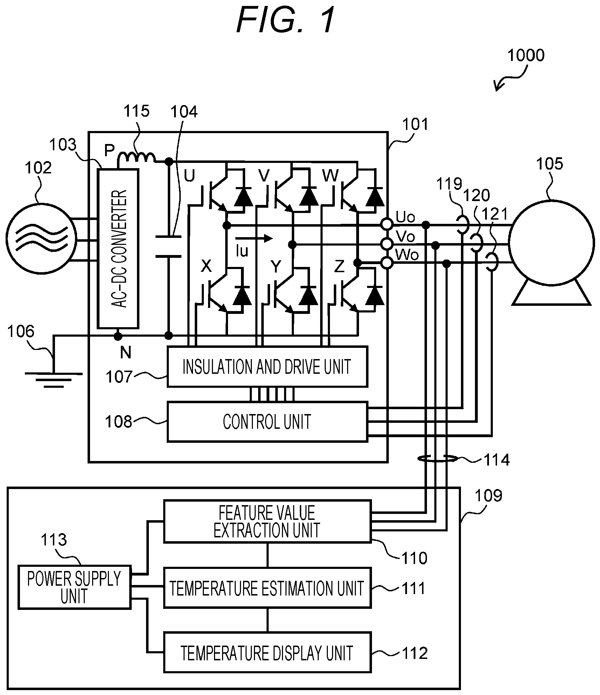

FIG. 1 is a block diagram illustrating a configuration example of a power conversion device 1000 including an inverter diagnostic device (hereinafter abbreviated as a "diagnostic device") 109, an inverter 101, and the like according to a first embodiment.

The inverter 101 is grounded by a ground wire 106, and is connected to a three-phase AC power supply 102 and a load device 105 such as a three-phase motor. The diagnostic device 109 is connected to some output terminals Uo and Vo among output terminals Uo, Vo, and Wo of the inverter 101. This inverter 101 uses, for example, power semiconductor devices U, V, W, X, Y, and Z to convert AC power or DC power into AC power having a variable frequency and a variable voltage.

The inverter 101 includes: an AC-DC converter 103, a smoothing capacitor 104, the power semiconductor devices U, V, W, X, Y, and Z, an insulation and drive unit 107, a control unit 108, and the output terminals Uo, Vo, and Wo. Here, the power semiconductor devices U, V, W, X, Y, and Z are collectively referred to as power semiconductor devices U to Z as appropriate. Incidentally, the AC-DC converter 103 is a component of the inverter 101, but a DC power supply may be used instead.

The inverter 101 once converts an AC voltage of the three-phase AC power supply 102 or the like input to the AC-DC converter 103, which is, for example, three sets of diode bridge circuits, into a DC voltage as will be described later. At this time, an unnecessary vibration component of the DC power is removed by the smoothing capacitor 104.

In the inverter 101, the power semiconductor device U and the power semiconductor device X are connected in series to form a U-phase leg (upper and lower arms). Similarly, the power semiconductor device V and the power semiconductor device Y are connected in series to form a V-phase leg, and the power semiconductor device W and the power semiconductor device Z are connected in series to form a W-phase leg. Each of these series circuits forming the U-phase, V-phase, and W-phase legs is connected between a positive DC power supply line P and a negative DC power supply line N.

Further, connection points between each of the power semiconductor devices U, V, and W connected to the positive DC power supply line P side in the U-phase, V-phase, and W-phase legs and each of the power semiconductor devices X, Y, and Z connected to the negative DC power supply line N side are the U-phase, V-phase, and W-phase output terminals Uo, Vo, and Wo, respectively.

The power semiconductor devices U to Z are collectively controlled by the control unit 108 and the insulation and drive unit 107, which will be described later, such that three-phase alternating currents having variable frequencies and variable voltages are output from the output terminals Uo, Vo, and Wo. Incidentally, a U-phase, a V-phase, and a W-phase of three-phase alternating currents input to the AC-DC converter 103 described above and a U-phase, a V-phase, and a W-phase of three-phase alternating currents output to the output terminals Uo, Vo, and Wo are different in voltage and frequency. Each of the power semiconductor devices U to Z includes a parasitic diode connected in anti-parallel or an added anti-parallel diode.

A parasitic inductance exists as a distributed constant in the positive DC power supply line P, and is illustrated as a parasitic inductance 115 in FIG. 1. Meanwhile, a parasitic inductance also exists in the negative DC power supply line N, but is omitted in the illustrated example.

The insulation and drive unit 107 drives the power semiconductor devices U to Z while maintaining the insulation between each of the power semiconductor devices U to Z and the control unit 108.

The control unit 108 controls the power semiconductor devices U to Z via the insulation and drive unit 107 as will be described later, performs pulse width modulation (PWM) of the DC voltage obtained by the AC-DC converter 103 to generate an AC voltage, and outputs the generated AC voltage from the output terminals Uo, Vo, and Wo to control the rotation speed and torque of the load device 105.

Specifically, the control unit 108 refers to information (information on a phase current), detected by current detection units 119, 120, and 121 provided at the U-phase, V-phase, and W-phase output terminals Uo, Vo, and Wo of the three-phase AC power of the power semiconductor devices U to Z, thereby controlling the power semiconductor devices U to Z via the insulation and drive unit 107. That is, the control unit 108 integrally controls a switching operation of the power semiconductor devices U to Z.

The current detection units 119, 120, and 121 are arranged at, for example, the U-phase, V-phase, and W-phase output terminals Uo, Vo, and Wo of the three-phase AC power of the power semiconductor devices U to Z, and detect the corresponding phase currents of the U-phase, V-phase, and W-phase. A part of the phase current detected by the current detection unit 119, 120, or 121 is converted into a voltage and sent to the control unit 108.

In the diagnostic device 109, a voltage change rate when the power semiconductor devices U to Z are turned off in a voltage across terminals of the output terminal Uo, Vo, and Wo of the inverter 101 is detected as a pulse width by the feature value extraction unit 110 via a voltage probe 114, and the detection result is analyzed by the temperature estimation unit 111, thereby estimating the temperatures of the power semiconductor devices U to Z in the inverter 101 and diagnosing a deterioration amount due to changes of the temperatures.

In the present embodiment, the diagnostic device 109 is connected so as to detect a voltage between the output terminal Vo and the output terminal Uo in order to estimate the temperature of the power semiconductor devices U and X, the diagnostic device 109 is connected between the output terminal Wo and the output terminal Vo in order to estimate the temperature of the power semiconductor devices V and Y, and the diagnostic device 109 is connected between the output terminal Wo and the output terminal Uo in order to estimate the temperature of the power semiconductor devices W and Z.

In the above-described configuration, three-phase (U-phase, V-phase, and W-phase) AC voltages are input to the respective input terminals of the AC-DC converter 103 in the inverter 101. The AC-DC converter 103 converts the three-phase AC voltages to DC voltages of the respective phases and then rectifies the converted voltages, and applies a positive voltage among them to one end of the smoothing capacitor 104 via the DC power supply line P, and applies a negative voltage to the other end of the smoothing capacitor 104 via the DC power supply line N.

Meanwhile, the diagnostic device 109 includes the feature value extraction unit 110, the temperature estimation unit 111, a temperature display unit 112, and a power supply unit 113. The power supply unit 113 supplies power to the feature value extraction unit 110, the temperature estimation unit 111, and the temperature display unit 112. The diagnostic device 109 detects voltages across the respective terminals of the output terminals Uo, Vo, and Wo of the inverter 101 using the voltage probe 114.

For example, when taking estimation of the temperature of the power semiconductor devices U and X as an example, the feature value extraction unit 110 extracts a temporal change value of a voltage change rate measured at the output terminals Uo and Vo as a feature value. Specifically, the feature value extraction unit 110 extracts the voltage waveform between the terminals of the output terminals Uo and Vo, attenuated via the voltage probe 114, and detects the voltage change rate when the power semiconductor devices U and X are turned on or off.

The temperature estimation unit 111 estimates the temperature of the power semiconductor devices U and X based on, for example, a temporal change value which is a difference between the voltage change rates of the output terminals Uo and Vo measured at different timings. Specifically, in the temperature estimation unit 111, the voltage change rate when the power semiconductor devices U to Z are turned on or off and temperature correlation information of the power semiconductor devices U to Z are preset, and the temperature of the power semiconductor devices U and X are estimated based on the voltage change rate detected by the feature value extraction unit 110. This temperature correlation information is information indicating a correlation between a temporal change value of the voltage change rate and the temperature of the power semiconductor devices U to Z.

The temperature display unit 112 displays the temperature of the power semiconductor devices U and X estimated by the temperature estimation unit 111.

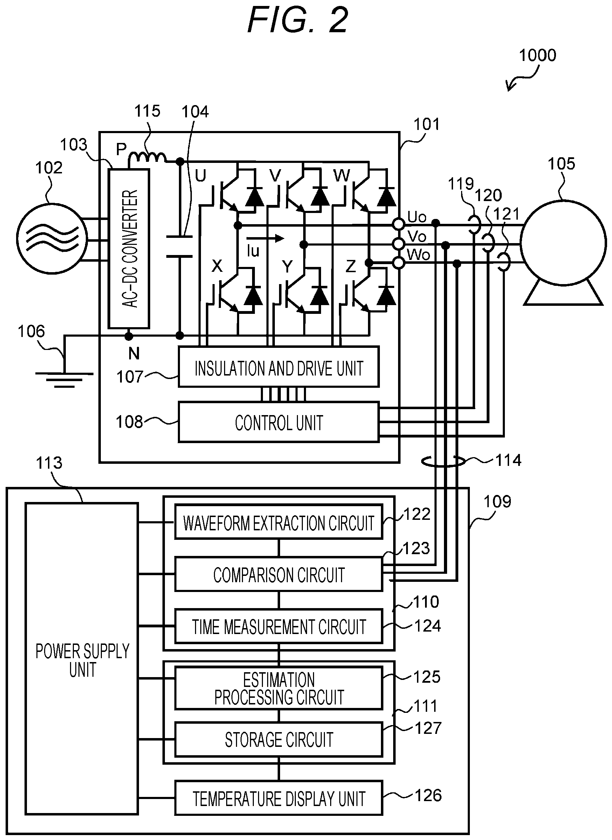

FIG. 2 illustrates a more specific configuration example of the feature value extraction unit 110 and the temperature estimation unit 111 of the diagnostic device 109 in the configuration illustrated in FIG. 1. In the present embodiment, as an example, the temperature of power semiconductor devices U and X are estimated based on a voltage across terminals when the output terminals Uo and Vo of the inverter 101 are turned off. The output terminals Uo, Vo, and Wo of the inverter 101 are connected to the load device 105 such as a motor.

The above-described feature value extraction unit 110 illustrated in FIG. 1 corresponds to a waveform extraction circuit 122, a comparison circuit 123, and a time measurement circuit 124 illustrated in FIG. 2, and the temperature estimation unit 111 illustrated in FIG. 1 described above corresponds to an estimation processing circuit 125 illustrated in FIG. 2.

The waveform extraction circuit 122 extracts a voltage across terminals between the output terminals Uo and Vo with the voltage probe 114.

The comparison circuit 123 is constituted by two comparison circuits, holds reference voltages V1 and V2 having different values, and determines a voltage change value of a voltage change rate in the turn-off state and a voltage change value of a voltage change rate in the turn-on state in the voltage waveforms extracted by the waveform extraction circuit 122. When the reference voltages V1 and V2 have the same value between the turn-on state and the turn-off state, temporal change values are different, and thus, the estimation processing circuit 125 can distinguish between the turn-off state and the turn-on state.

The time measurement circuit 124 measures the temporal change value of the voltage change rate in the turn-off state detected by the comparison circuit 123 and measures the temporal change value of the voltage change rate in the turn-on state which are input one after another,

The estimation processing circuit 125 adds a time stamp to this temporal change value of the voltage change rate (feature value) and estimates the temperature of the power semiconductor devices U and X based on the temperature correlation information stored in advance in a storage circuit 127.

The estimation processing circuit 125 associates one time stamp with the time measurement result of the temporal change value and the estimated temperature result. Incidentally, the accuracy of the estimated temperature is improved if a value of a phase current at the time of detecting the temporal change value is also associated.

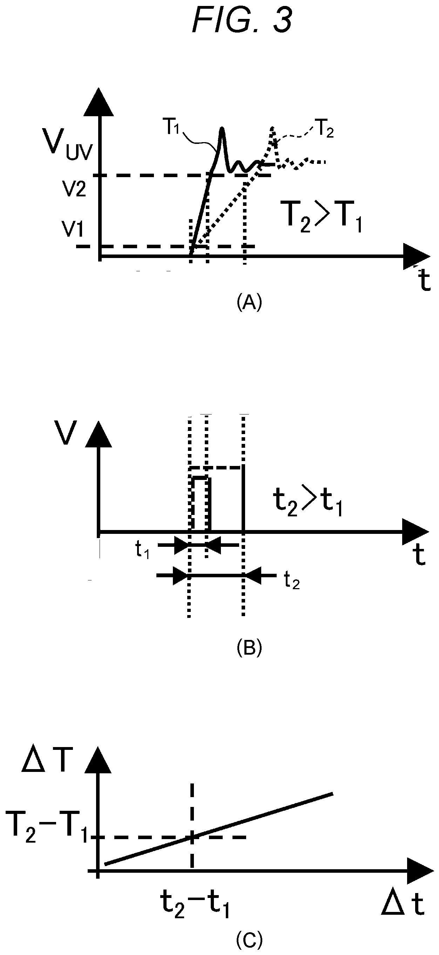

FIGS. 3(A) to 3(C) illustrate the principle of estimating the temperature of the power semiconductor devices U to Z. Here, the principle of performing temperature estimation when it is detected that the temperature of the power semiconductor devices U and X has changed from T₁ to T₂ will be illustrated.

First, FIG. 3(A) illustrates an electric waveform of the output of the waveform extraction circuit 122 (feature value extraction unit 110). Incidentally, the vertical axis represents a voltage Vuv across terminals between the output terminals Uo and Vo, and the horizontal axis represents time t. An extracted waveform when the temperature is T₁ is indicated by the solid line, and an extracted waveform when the temperature rises to T₂ is indicated by the broken line.

The waveform extraction circuit 122 extracts a voltage waveform across terminals between the output terminals Uo and Vo of the inverter 101 via the voltage probe 114. It is illustrated that a rise time becomes longer and the voltage change rate decreases as the temperature rises. The reference voltages V1 and V2 indicate reference voltages set in the comparison circuit 123 at the next stage.

The comparison circuit 123 determines a temporal change value of the voltage change rate in the turn-on state or the turn-off state of the voltage waveform across the terminals using the two reference voltages V1 and V2 as the reference. When the comparison circuit 123 is configured using, for example, a window comparator, the comparison circuit 123 outputs the time, required for the extracted voltage waveform to reach the reference voltage V2 from the reference voltage V1, in a pulse width.

FIG. 3(B) illustrates an electric waveform of output of the comparison circuit 123. Incidentally, an output waveform at temperature T₁ is indicated by the solid line, and an output waveform at temperature T₂ is indicated by the broken line.

When assuming that a pulse width at temperature T₁ of the time measurement circuit is t₁ and a pulse width at temperature T₂ is t₂, t₁ < t₂ is satisfied. Therefore, t₂ - t₁ becomes correlation information on the device temperature.

FIG. 3(C) illustrates an output waveform of the estimation processing circuit 125. The estimation processing circuit 125 estimates the temperature of the power semiconductor device U using t₂ - t₁ based on correlation information between a temporal change value of a voltage change rate of the power semiconductor device U that is set in advance and the actual temperature of the power semiconductor device U. The estimation processing circuit 125 adds a time stamp to t₂ - t₁ and the estimated temperature result, and associates these three pieces of information with each other to be stored as management information.

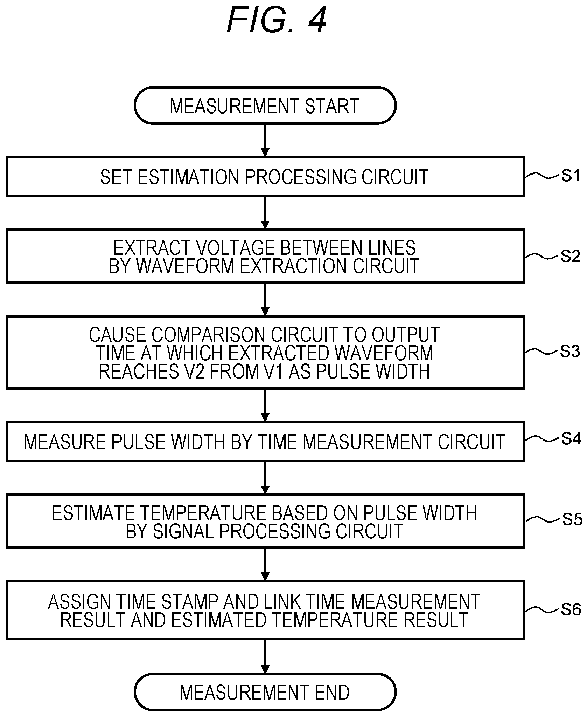

FIG. 4 illustrates an example of a procedure for estimating the temperature of the power semiconductor device. At the start of measurement, more preferably before the start of measurement, the estimation processing circuit 125 sets the correlation information between the temperature of the power semiconductor device U and the voltage change rate, setting information of the time measurement circuit 124, and the reference voltages V1 and V2 of the comparison circuit 123 (Step S1).

The waveform extraction circuit 122 extracts a voltage waveform across terminals of the output terminals Uo and Vo (Step S2). The comparison circuit 123 outputs a pulse having, as a pulse width, the time (time measurement result) required until the output waveform thereof reaches the reference voltage V2 from the reference voltage V1 (Step S3).

The time measurement circuit 124 measures the pulse width of this pulse (Step S4). The estimation processing circuit 125 estimates the temperature (estimated temperature result) from the voltage change rate derived from this pulse width by referring to the above-described temperature correlation information (Step S5), and associates the time measurement result and the estimated temperature result using a time stamp to be stored as management information (Step S6). As a result, the history of temperature changes of the power semiconductor devices U to Z of the inverter 101 can be managed based on the time stamp.

Although the temperatures and temperature rises (temperature changes) of the power semiconductor devices U to Z of the inverter 101 are estimated in real time in the present embodiment, temperatures and temperature rises (temperature changes) of the power semiconductor devices U to Z of the inverter 101 may be estimated and a lifetime of the inverter 101 may be predicted based on the deterioration of the device accompanying the estimation results. In such temperature estimation and lifetime prediction, grasping states of the power semiconductor devices U to Z is an issue, and thus, the power semiconductor devices U to Z will be described in detail below.

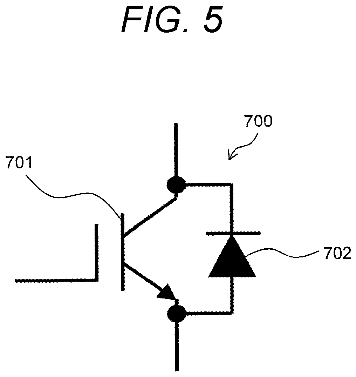

FIG. 5 is a circuit diagram illustrating a configuration example of a circuit including any of the power semiconductor devices U to Z (hereinafter collectively referred to as a "power semiconductor circuit 700") .

The power semiconductor circuit 700 includes an IGBT 701 and a diode 702 that is connected in parallel between an emitter terminal and a collector terminal of the IGBT 701 in the opposite direction.

Incidentally, the IGBT 701 may be replaced with a metal-oxide-semiconductor field-effect transistor (MOSFET). Further, when a parasitic diode of MOSFET can be applied instead of the diode 702, the diode 702 may be omitted.

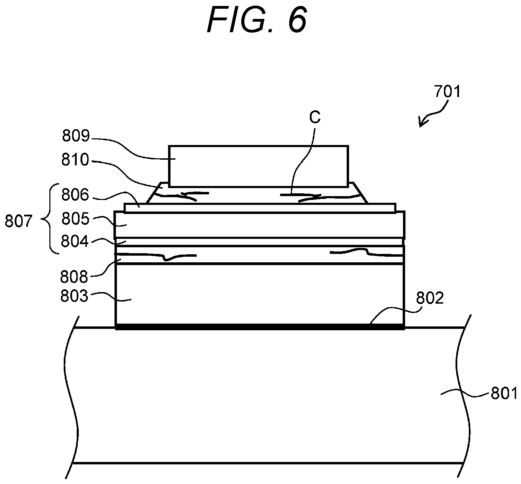

FIG. 6 is a cross-sectional view illustrating a cross section of the IGBT 701 illustrated in FIG. 5. As described above, the IGBT 701 corresponds to the power semiconductor devices U to Z.

The IGBT 701 includes a semiconductor device section 809, a solder layer 810, an insulating substrate 807, a solder layer 808, and a base plate 803. Incidentally, a crack C sometimes occurs in the solder layers 808 and 810.

The insulating substrate 807 has a metal layer 806, an insulating layer 805, and a metal layer 804. The base plate 803 abuts against a cooler 801, and an abutting surface is coated with grease 802. The grease 802 improves heat conduction.

As described above, FIG. 5 illustrates the power semiconductor devices U to Z as the IGBT 701, and the semiconductor device section 809 exists as a component thereof.

On the other hand, in FIG. 6, only one semiconductor device section 809 corresponds to one power semiconductor device. However, a plurality of the semiconductor device sections 809 are sometimes used when forming one power semiconductor device. For example, in a semiconductor module that is applied for high power applications whose output power is the megawatt class, a large number of the semiconductor device sections 809 are generally mounted in parallel and used as one power semiconductor device.

When the power conversion device 1000 described above operates, heat generated in the semiconductor device section 809 illustrated in FIG. 6 is transferred to the insulating substrate 807, the base plate 803, the grease 802 and the cooler 801 via the solder layer 810.

When this power conversion device 1000 operates, the temperatures of the power semiconductor devices U to Z and the semiconductor device section 809 of the power semiconductor devices U to Z sometimes become abnormally high due to exhaustion of the grease 802, failure of the cooler 801, an abnormal operation, failure of a control unit or the like.

When the temperature of the semiconductor device section 809 becomes abnormally high, thermal fatigue due to a temperature cycle causes trouble, such as the crack C and peeling, in the solder layers 808 and 810. When such trouble occurs, the thermal resistance of the solder layers 808 and 810 becomes high, and the crack C, peeling, and the like grow, so that accumulated deterioration occurs. As a result, the channel resistance of the semiconductor device section 809 is burned out eventually, and the power semiconductor device fails.

Therefore, it is desirable to detect an abnormality before the failure by monitoring the temperatures of the power semiconductor device and the semiconductor device section 809. Further, it is desirable to measure the temperature of the surface of the semiconductor device section 809 in order to detect the temperature with high accuracy.

Next, an example of a test result when a power cycle test is performed on the power semiconductor device to raise the temperature or return to the original temperature will be described.

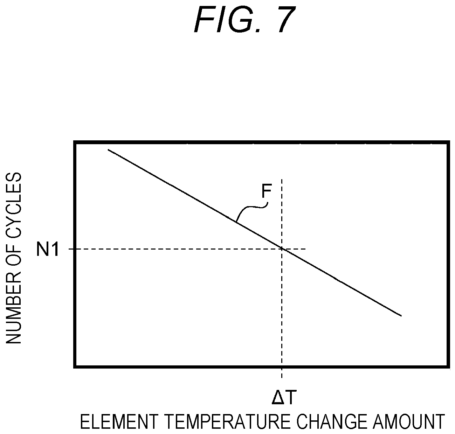

FIG. 7 is a characteristic diagram illustrating test results of the power cycle test of the power semiconductor devices U to Z. The horizontal axis represents a device temperature change amount ΔT, and the vertical axis represents the number of cycles (the number of power cycles) N1. Incidentally, both the horizontal axis and the vertical axis are expressed using a log scale.

An operation of "applying a certain temperature increase ΔT and returning to the original temperature" for a certain power semiconductor device is defined as "one cycle", and it is assumed that the power semiconductor device has failed when this operation is executed for N1 cycles.

Incidentally, if a device temperature (temperature of the power semiconductor device) before the temperature rise is T01 and a device temperature after the temperature rise is T02, the temperature increase (change amount) ΔT is equal to T02 - T01. The actual measurement for the number N1 of cycles regarding various temperature increases ΔT is referred to as the "power cycle test", and a feature F illustrated in FIG. 7 represents an example of the result of the power cycle test.

Here, stress S of the power semiconductor device when a certain temperature increase ΔT occurs once is S = 1/N1. If the time for holding the device temperature T02 is th seconds, a lifetime LF of the power semiconductor device can be estimated as LF = th/S seconds later. As a result, a remaining lifetime can be estimated by subtracting an already consumed lifetime from an expected remaining lifetime of the power semiconductor device as a new product.

The storage circuit 127 stores the feature F illustrated in FIG. 7. The estimation processing circuit 125 estimates the stress S and the lifetime LF of the power semiconductor device based on the feature F, and predicts the remaining lifetime of the power semiconductor device based on the result of this estimation.

The number of cycles and a range of the temperature change at this time are based on an operation pattern of the inverter 101, and information regarding the operation pattern (hereinafter referred to as "operation pattern information") is stored in the storage circuit 127.

According to the first embodiment, it is possible to accurately estimate the device temperatures of the power semiconductor devices U to Z of the inverter 101 in the power conversion device 1000 easily using the diagnostic device 109 having a simple and retrofittable configuration.

### (2) Second Embodiment

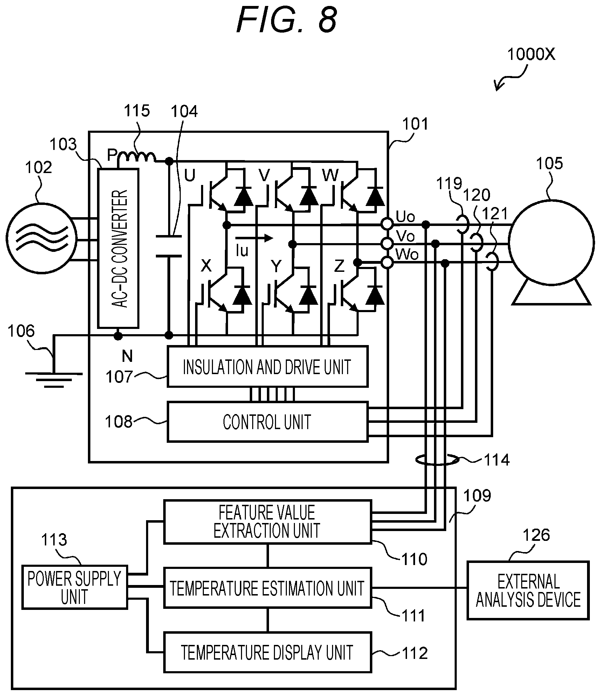

FIG. 8 illustrates a configuration example of a power conversion device 1000X including an inverter diagnostic device (hereinafter abbreviated as a "diagnostic device"), the inverter 101, and the like according to a second embodiment. In the second embodiment, the same configurations and operations as those of the first embodiment will not be described, and differences therebetween will be mainly described hereinafter.

In the second embodiment, an external analysis device 126 is externally connected to (the temperature estimation unit 111 of) the diagnostic device 109. The external analysis device 126 provides temperature correlation information to the temperature estimation unit 111 or receives and analyzes the temperature (temperature estimation result) estimated by the temperature estimation unit 111, for example.

The diagnostic device 109 includes an analysis content setting unit (not illustrated) that provides the external analysis device 126 with the temperature correlation information, operation pattern information representing an operation pattern of the inverter 101, and power cycle test information indicating a test result of a power cycle test of the inverter 101, and sets each information input to the external analysis device 126 as the information used for analysis in the external analysis device 126.

The external analysis device 126 estimates lifetimes of the power semiconductor devices U to Z constituting the inverter 101 based on the setting of a processing algorithm set by the temperature estimation unit 111, the setting of the feature value extraction unit 110 via the temperature estimation unit 111, the setting of the temperature display unit 112, and a time stamp, a time measurement result, and a temperature estimation result obtained by the temperature estimation unit 111.

Incidentally, a change in temperature of the power semiconductor devices U to Z is calculated from a change in voltage change rate of a waveform during switching of the power semiconductor devices U to Z, and thus, a thermal time constant is reduced, and it is possible to detect even a rapid temperature change.

In the second embodiment, the external analysis device 126 stores the feature F illustrated in FIG. 7. The estimation processing circuit 125 estimates stress S and a lifetime LF of a power semiconductor device based on the feature F acquired from the external analysis device 126, and predicts a remaining lifetime of the power semiconductor device based on the result of this estimation.

The number of cycles and a range of temperature change at this time are based on the operation pattern of the inverter 101. The external analysis device 126 has the above-described operation pattern information.

According to the second embodiment, it is possible to accurately estimate the temperatures and lifetimes of the power semiconductor devices U to Z easily by using the diagnostic device 109 having a retrofittable configuration.

### (3) Third Embodiment

In a third embodiment, the same configurations and operations as those of the above-described respective embodiments will not be described, and differences therebetween will be mainly described hereinafter.

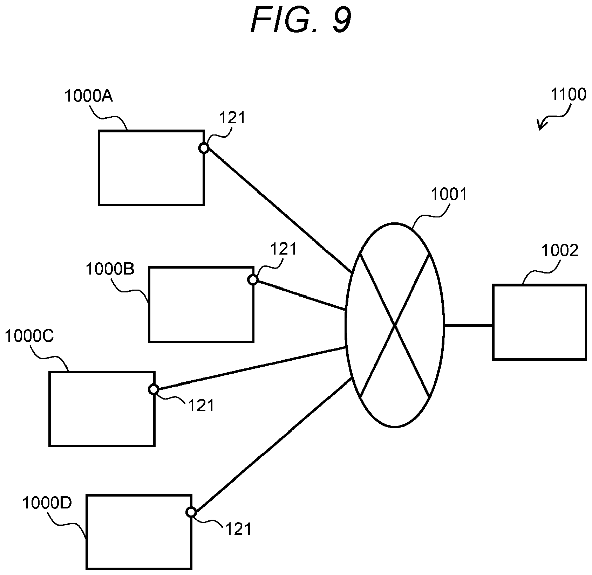

FIG. 9 illustrates a configuration example of an inverter diagnostic system 1100 according to the third embodiment. In the illustrated example, power conversion devices 1000A, 1000B, 1000C, and 1000D corresponding to the power conversion device 1000 according to each of the above-described embodiments and one monitoring server 1002 are connected to a communication network 1001 via communication units 121, respectively.

The monitoring server 1002 monitors inverters installed in the power conversion devices 1000A, 1000B, 1000C and 1000D, respectively. The inverters described here correspond to the inverter 101 or the like in each of the above-described embodiments.

The inverter diagnostic system 1100 according to the third embodiment includes: at least one diagnostic device 109 including the feature value extraction unit 110 and the temperature estimation unit 111 (and preferably the temperature display unit 112) described above in FIG. 1 and the like; and the monitoring server 1002 that is connected to the diagnostic device 109 via a network, and monitors at least one power conversion device (equivalent to each of the power conversion devices 1000A, 1000B, 1000C, and 1000D) based on the temperature estimated by the temperature estimation unit 111.

With the above configuration, the plurality of inverters 101 are monitored using the single monitoring server 1002 to estimate device temperatures of the semiconductor devices U to Z belonging to the respective inverters 101, and further, to estimate lifetimes thereof.

According to the above configuration, it is possible to remotely monitor the plurality of inverters 101 using the single monitoring server 1002, to accurately estimate the device temperatures of the semiconductor devices U to Z belonging to the respective inverters 101, and further, to estimate the lifetimes thereof.

Further, the monitoring server 1002 can be externally connected to the diagnostic device 109 as described above, and the respective inverters 101 may be monitored based on an analysis result obtained by the external analysis device 126 that receives the temperature estimated by the temperature estimation unit 111.

### (4) Other Embodiments

The above embodiments are examples given to describe the present invention, and are not intended to limit the present invention only to these embodiments. The present invention can be implemented in various modes without departing from a gist thereof. For example, as the power conversion device, a power conversion device that includes a plurality of power semiconductor devices and converts AC power into AC power having a variable frequency and a variable voltage can be used. Further, it is also possible to estimate temperatures, temperature changes, lifetimes, and the like of the power semiconductor devices U to Z based on voltage change rates when the power semiconductor devices U to Z are turned on. Further, the diagnostic device 109 can be configured by, for example, a computer device including information processing resources such as a central processing unit (CPU), a memory, and an input/output interface.

Further, each of the above-described configurations, functions, and the like may be partially or entirely realized by hardware, for example, by designing an integrated circuit. Further, the above-described respective configurations, functions and the like may be realized by software by the processor interpreting and executing a program for realizing the respective functions. Information such as programs, tables, and files that realize the respective functions can be recorded in a recording device such as a memory, a hard disk, and a solid state drive (SSD), or a recording medium such as an IC card, an SD card, and a DVD.

### Industrial Applicability

The present invention can be widely applied to a diagnostic device and a diagnostic system that estimate the temperature of a power semiconductor device mounted on an inverter.

### Reference Signs List

- 101: inverter
- 102: three-phase AC power supply
- 103: AC-DC converter
- 104: smoothing capacitor
- 105: load device
- 106: ground wire
- 107: insulation and drive unit
- 108: control unit
- 109, 109A: diagnostic device
- 110: feature value extraction unit
- 111: temperature estimation unit
- 112: temperature display unit
- 113: power supply unit
- 114: voltage probe
- 115: parasitic inductance
- 119, 120, 121: current detection unit
- 122: waveform extraction circuit
- 123: comparison circuit
- 124: time measurement circuit
- 125: estimation processing circuit
- 126: external analysis device
- 701: IGBT
- 702: diode
- 800: power semiconductor circuit
- 801: cooler
- 802: grease
- 803: base plate
- 804, 806: metal layer
- 805: insulating layer
- 807: insulating substrate
- 808, 810: solder layer
- 809: semiconductor device section
- 1000: power conversion device
- 1002: monitoring server
- 1100: inverter diagnostic system
- 1001: communication network
- 1002: server
- 1000A, 1000B, 1000C, 1000D: power conversion device

## Claims

1. A diagnostic device comprising:
a feature value extraction unit that extracts a temporal change value of a voltage change rate, measured at an output terminal of a power conversion device that converts AC power or DC power into AC power having a variable frequency and a variable voltage using a power semiconductor device, as a feature value;
a temperature estimation unit that estimates a temperature of the power semiconductor device based on a temporal change value, which is a difference between voltage change rates of the output terminal as the feature values measured at different timings; and
a temperature display unit that displays the temperature estimated by the temperature estimation unit.

2. The diagnostic device according to claim 1, wherein
the feature value extraction unit comprises:
a waveform extraction circuit that extracts a voltage waveform at the output terminal;
a comparison circuit that determines a temporal change value of a voltage change rate in a turn-on state or a turn-off state of the voltage waveform using two reference voltages as references; and
a time measurement circuit that measures the temporal change value of the voltage change rate as the feature value, and
the temperature estimation unit estimates the temperature of the power semiconductor device based on temperature correlation information, which indicates a correlation between the temporal change value of the voltage change rate as the feature value and the temperature of the power semiconductor device, and the feature value.

3. The diagnostic device according to claim 2, wherein
the temperature estimation unit comprises:
a storage circuit capable of storing the temperature correlation information; and
an estimation processing circuit that estimates the temperature of the power semiconductor device based on the temporal change value of the voltage change rate as the feature value.

4. The diagnostic device according to claim 1, wherein
the temperature estimation unit adds a time stamp to the feature value and the estimated temperature to manage the time stamp, the feature value, and the estimated temperature in association with each other.

5. The diagnostic device according to claim 2 externally connected to an external analysis device that provides the temperature correlation information to the temperature estimation unit and receives and analyzes the temperature estimated by the temperature estimation unit.

6. The diagnostic device according to claim 5, wherein
the temperature estimation unit adds a time stamp to the feature value and the estimated temperature to be stored as management information, and
the external analysis device estimates a lifetime of the power semiconductor device based on the management information.

7. The diagnostic device according to claim 6, wherein
the external analysis device predicts the lifetime of the power semiconductor device in real time based on the management information.

8. The diagnostic device according to claim 5, further comprising
an analysis content setting unit that provides the external analysis device with the temperature correlation information, operation pattern information indicating an operation pattern of the power conversion device, and power cycle test information indicating a test result of a power cycle test of the power conversion device, and sets each pieces of the information input to the external analysis device as information used for analysis in the external analysis device.

9. A diagnostic system comprising:
at least one diagnostic device that comprises: a feature value extraction unit that extracts a temporal change value of a voltage change rate, measured at an output terminal of a power conversion device that converts AC power or DC power into AC power having a variable frequency and a variable voltage using a power semiconductor device, as a feature value; and a temperature estimation unit that estimates a temperature of the power semiconductor device based on a temporal change value, which is a difference between voltage change rates of the output terminal measured at different timings; and
a monitoring server that is connected to the diagnostic device via a network and monitors the power conversion device based on the temperature estimated by the temperature estimation unit.

10. A diagnostic system comprising:
at least one diagnostic device that comprises: a feature value extraction unit that extracts a temporal change value of a voltage change rate, measured at an output terminal of a power conversion device that converts AC power or DC power into AC power having a variable frequency and a variable voltage using a power semiconductor device, as a feature value; and a temperature estimation unit that estimates a temperature of the power semiconductor device based on a temporal change value, which is a difference between voltage change rates of the output terminal as the feature value measured at different timings; and
a monitoring server that is connected to the diagnostic device via a network, and monitors the power conversion device based on an analysis result obtained by an external analysis device that is externally connectable to the diagnostic device and receives the temperature estimated by the temperature estimation unit.
